# EUROPÄISCHE PATENTSCHRIFT

(11) **EP 3 908 521 B1**
(45) Veröffentlichungstag und Bekanntmachung des Hinweises auf die Patenterteilung: **21.08.2024**
(21) Anmeldenummer: 20700651.1
(22) Anmeldetag: 07.01.2020
(51) Int. Cl.: B64F 1/315

(54) **TREPPE MIT ANNÄHERUNGSHILFE**
STEPS COMPRISING APPROACH AID
ESCALIER À AUXILIAIRE D'APPROCHE

(30) Priorität: 07.01.2019 DE 102019100191
(43) Veröffentlichungstag der Anmeldung: 17.11.2021
(73) Patentinhaber: Krämer GmbH, 72555 Metzingen (DE)
(72) Erfinder: LOSCH, Max, 72820 Sonnenbühl-Genkingen (DE)
(74) Vertreter: Jeck, Anton
(86) Internationale Anmeldenummer: PCT/EP2020/050233
(87) Internationale Veröffentlichungsnummer: WO 2020/144193

(56) Entgegenhaltungen:
- EP-A1- 3 412 580
- EP-A1- 3 511 251
- DE-A1- 4 101 430
- DE-A1- 4 113 126
- US-A1- 2005 198 750
- US-A1- 2016 054 443
- US-A1- 2016 318 629
- US-A1- 2017 060 127
- US-A1- 2018 229 860

## Beschreibung

Die Erfindung betrifft eine Flugzeugtreppe insbesondere nach dem Oberbegriff des Anspruchs 1.

Fahrzeuge mit aufgesetzten Fluggasttreppen, die über das Rollfeld zu Flugzeugen gefahren und dort an die hochgelegenen Eingänge bzw. Ausgänge der Flugzeuge angestellt werden, sind bekannt. Sie weisen oft Kabinen auf, in denen ein Fahrer eine Antriebs- und Lenkvorrichtung der Treppe betätigt und das Fahrzeug mit dem Treppenaufsatz steuert. Nachdem das Fahrzeug seine betriebsgemäße Position in Bezug auf das Flugzeug eingenommen hat, wird der Fahrer von einem Dritten zurück in die Flughalle gefahren.

Die US 2016/054443 lehrt ein System, bei welchem mittels virtuellen Modellen von Flugzeug und Flugzeugtreppe in Echtzeit basierend auf einer Kombination von GPS und Radardaten eine Flugzeugtreppe einem Flugzeug zugeführt wird.

Aus der US 2018/229860 ist eine Flugzeug-Bodenunterstützungseinheit zur Versorgung eines Flugzeugs am Boden mit einem spezifischen Wartungsprogrammbekannt.

Die US 2017/060127 lehrt das Zustellen einer Flugzeugtreppe an ein Flugzeug basierend auf hinterlegten Ortungsdaten des Flugzeugs und eines GPS-Signals der Treppe. Mittels eines Abstandsensors kann ein automatischer Stopp beim Erreichen eines Mindestabstands der Treppe von dem Flugzeug bewirkt werden.

Kleinere Fluggasttreppen werden in der Regel mittels eines Schleppers zum Flugzeug geschleppt, etwa 30 m vom Flugzeug weg abgestellt und sodann zum Flugzeug in ihre Betriebsposition von Hand verschoben, da in unmittelbarer Nähe (ca. 30 m Radius) zu einem Flugzeug nur Schrittgeschwindigkeit, ca. 5 km/h (Nahbereich), erlaubt ist und das Manövrieren mit einem Anhänger eine erhöhte Schwierigkeit darstellt. Bei Flugzeugtreppen von mehr als 1,5 t Gewicht kann dies kraftraubend und aufwendig sein und führt zu Ungenauigkeiten bei der Ausführung.

Ausgehend von dem obigen Stand der Technik liegt der Erfindung die **Aufgabe** zugrunde, hier Abhilfe zu schaffen und die gattungsgemäße Flugzeugtreppe so weiterzubilden, dass eine verbesserte Ausrichtung und Annäherung der Treppe an ein Flugzeug, zumindest hinsichtlich der relativen Position, ermöglicht ist.

Die gestellte Aufgabe wird erfindungsgemäß durch die Merkmale des Anspruchs 1 gelöst.

Erfindungsgemäß ist eine Navigationseinrichtung vorgesehen, mittels welcher die Flugzeugtreppe an einer Flugzeugtür oder Flugzeugluke des Flugzeugs ortsgenau positionierbar/verfahrbar ist.

Die Navigationseinrichtung kann sich insbesondere dadurch auszeichnen, dass sie Mittel zum Bestimmen und/oder Anpassen einer Relativposition der Treppen gegenüber dem Flugzeug und/oder Mittel zum Bestimmen und/oder Anpassen einer Orientierung der Treppe gegenüber dem Flugzeug aufweist.

Eine Orientierung kann insbesondere eine Ausrichtung der Treppe gegenüber dem Flugzeug sein. Dazu können gehören das Einstellen der Ausrichtung eines Winkles der Flugzeugtreppe gegenüber einem Rumpfabschnitt des Flugzeugs, also beispielsweise das Ausrichten einer vorderen Kannte einer Kanzel der Flugzeugtreppe, vorzugsweise parallel zu dem Abschnitt und/oder eine Ausrichtung bzw. Anpassung einer Höhe der Kanzel gegenüber einer Ausstiegsluke, sodass vorzugsweise ein stufen- bzw. barrierefreies Ein- und Aussteigen ermöglicht ist und/oder ein Abstand, den die Flugzeugtreppe, insbesondere die Kanzel der Flugzeugtreppe, gegenüber dem Flugzeugrumpf im (berührungsfrei) angestellten Zustand hat und/oder, vorzugsweise dynamisch, einnimmt. Da die Höhe der Luke gegenüber einer Bodenebene mit dem Ladegewicht des Flugzeugs (Passagiere/ Kerosin/ Gepäck) einer Veränderung unterliegt, kann es vorgesehen sein, dass die Ausrichtung der Kanzel gegenüber der Luke (dynamisch bzw. in Echtzeit) erkannt wird und eine Anpassung der Höhe der Kanzel, vorzugsweise stufenlos erfolgt.

Eine Anpassung kann auch hinsichtlich des Abstands erforderlich und möglich sein, da ein Flugzeugrupf in der Regel gewölbt ist, kann durch ein (gewichtsbedingtes) Absinken des Flugzeugrumpfs, dieser sich der Kanzel der Treppe annähern oder sich von dieser entfernen. Durch entsprechende Abstandsmessung und Stellmittel zur Veränderung der Distanz der Kanzel oder der gesamten Flugzeugtreppe gegenüber dem Flugzeugrupf kann eine erkannte Veränderung des Abstands kompensiert werden. Die Mittel an der Kanzel können beispielsweise Stellzylinder sein, welche zumindest einen (vorderen) Teil der Kanzel verlängern oder verkürzen oder die Kanzel insgesamt auf das Flugzeug zu und/oder davon wegbewegen.

Flugzeugtür und Flugzeugluke können nach der vorliegenden Erfindung synonym verwendet sein.

Ein zustellbarer Bereich, welcher auch als anstellbar bezeichnet werden kann, kann jeder Bereich der Flugzeugtreppe sein, welcher sich einem Flugzeug nähert. Üblicherweise ist dies zumindest die Kanzel einer Flugzeugtreppe, also der Bereich an einem oberen Ende der Flugzeugtreppe, über welchen Passagiere beim Aussteigen aus einem Flugzeug die Flugzeugtreppe betreten. Dieser Bereich ist üblicherweise der Bereich einer Flugzeugtreppe, welcher dem Flugzeug am nächsten kommt. Sollte eine Flugzeugtreppe so ausgebildet sein, dass andere Bereiche sich dem Flugzeug auch oder stärker nähern als die Kanzel, können diese ebenso erfindungsgemäß einen zustellbaren Bereich bilden, welcher nach dem Flugzeug, insbesondere in oben beschriebener Weise ausgerichtet werden kann.

Ein Nahbereich nach der vorliegenden Erfindung kann insbesondere ein Bereich sein, in welchem ein Großteil eines Zustellvorgangs einer Flugzeugtreppe zu einem Flugzeug abgeschlossen ist, und hauptsächlich Rangier- und Einstelltätigkeiten, wie beispielsweise eine Höheneinstellung und/oder das Einstellen eines Winkels zwischen Flugzeug und Treppe und/oder eine Relativposition korrigiert und/oder einnehmbar sind. Zumindest kann dann von einem Nahbereich einer Flugzeugtreppe gegenüber einem Flugzeug gesprochen werden, wenn sich diese in einem Radius von ca. 1 m, ca. 5 m, ca. 10 m oder ca. 30 m um das Flugzeug befindet.

Man erkennt, dass die Erfindung jedenfalls dann verwirklicht ist, wenn Einrichtungen an der Flugzeugtreppe bereitgestellt sind, die eine positionsgenaue Ausrichtung (Relativposition und/oder Ausrichtung der Flugzeugtreppe (Höhe der Treppe und/oder Winkle) gegenüber dem Flugzeug) der selbigen gegenüber einem Flugzeug, an welches die Treppe angestellt werden soll, ermöglichen.

Weitere zweckmäßige und vorteilhafte Ausgestaltungen der Erfindung gehen aus den Unteransprüchen hervor.

Das kontaktlose Anstellen soll insbesondere einer Verletzung der Außenhaut des Flugzeugs vorbeugen. Bei der Ausrichtung einer Flugzeugtreppe gegenüber einem Flugzeug ist es jedoch erforderlich, darauf zu achten, dass die Treppe dem Flugzeug, beziehungsweise der Flugzeugaußenhaut, insbesondere dem Flugzeugrumpf, möglichst parallel ausgerichtet ist und dass Lücken zwischen Flugzeug und Flugzeugtreppe, insbesondere im Türbereich, möglichst geringgehalten werden. Bevorzugt ist ein Abstand von wenigen Zentimetern.

Bisher bedurfte es für ein kontaktfreies Ausrichten der Flugzeugtreppe gegenüber einem Flugzeug einer erhöhten Fertigkeit des Bodenpersonals, um ein Aussteigen der Gäste nicht durch eine fehlerhafte Positionierung der Flugzeugtreppe zu gefährden. Eine Anpassung kann vorteilhafter Weise selbst während des Ausstiegs von Passagieren, also einer Benutzung der Treppe erfolgen. Diesem Umstand soll die vorliegende Erfindung entgegenwirken.

Nach einer bevorzugten Weiterbildung ist es vorgesehen, dass die Navigationseinrichtung eine berührungsfreie Markierungseinrichtung aufweist, mittels welcher die Position und/oder Ausrichtung mindestens eines dem Flugzeug zustellbaren Bereichs der Flugzeugtreppe gegenüber dem Flugzeug, vorzugsweise visuell, bestimmbar ist. Die berührungsfreie Markierungseinrichtung ist nicht auf eine bestimmte Ausführungsform beschränkt, weist bevorzugt jedoch zumindest ein Leuchtmittel auf. Das Leuchtmittel gibt bevorzugt die jeweils aktuelle Position der Kanzel gegenüber dem Markierten Punkt oder Bereich an dem Flugzeugrupf wieder. Die Position soll dabei zumindest die Höhe und/oder die laterale Ausrichtung der Kanzel (bzw. Treppe) gegenüber dem Flugzeugrumpf sein.

Die Navigationseinrichtung kann es grundsätzlich ermöglichen, die Flugzeugtreppe bereits bei der ersten Anfahrt schon von einer Distanz von bis zu 50 Metern oder mehr vorteilhaft gegenüber dem Flugzeugrumpf auszurichten.

Nach einer bevorzugten Ausführungsform kann die Navigationseinrichtung jedoch zumindest einen Laser aufweisen, welcher eine Lichtmarkierung von der Flugzeugtreppe auf das Flugzeug wirft, wobei die Lichtmarkierung stellvertretend für die Position eines Bereichs der Flugzeugtreppe steht, die dieser Bereich einnehmen wird, unmittelbar (wenige Zentimeter; z.B. 1-50 cm) bevor eine Berührung der Flugzeugtreppe mit dem Flugzeug bevorsteht. Hierdurch kann die Ausrichtung der Flugzeugtreppe gegenüber dem Flugzeug kontaktfrei vornehmbar sein. Vorteilhafter Weise ist die Markierung mindesten eine visuell wahrnehmbare Linie (oder entsprechend vereinfach dargestellt zwei Punkte) vorzugsweise zwei Linien (oder entsprechend vereinfach dargestellt drei oder vier Punkte), welche eine horizontale und vertikale Ausrichtung der Kanzel gegenüber dem Flugzeugrupf wiedergeben. So kann visualisiert werden, ob eine Flugzeugtreppe für einen bevorzugt stufenfreien Einstieg, welcher grundsätzlich auch als Einstig mit definierter Stufe ausgebildet sein kann, die passende Höhe aufweist und/oder ob die Kanzel der Flugzeugtreppe mittig zur Flugzeugluke oder möglicherweise zu weit rechts oder links ausgerichtet ist. Dafür kann die horizontale Markierung beispielsweise eine Unterkante der Einstiegsluke markieren (bündig sein, überlappen), wenn die Kanzel die voranstehend beschriebene Höhe erreicht hat und/oder eine vertikale Markierung mit einer seitlichen Rahmenkannte markiert sein (bündig sein, überlappen), wenn die Treppe in einer horizontalen Ebene in etwa mittig zur Luke ausgerichtet ist, beziehungsweise so ausgerichtet ist, dass die Tür der Luke für seine Schwenkbewegung beim Öffnen ausreichen Platz hat.

Grundsätzlich kann statt der/dem Laser oder Leucht-/Lichtmarkierung(en), wie auf Seite 5 beschrieben, auch beispielsweise mittels eines Infrarotleuchtmittels eine oder mehrere Markierungen auf den Flugzeugrumpf in voranstehend beschriebener Weise geworfen werden, welche von einem entsprechend ausgebildetem Sensor erfasst werden und auf einem Display dargestellt werden kann. Dies kann insbesondere dann hilfreich sein, wenn aufgrund einer hohen Umgebungshelligkeit die Lasermarkierung auf dem Flugzeug mit den bloßen Augen nicht mehr zu erkennen wäre.

Die entsprechende IR-Markierung kann dann zur automatisierten oder manuellen Höhenkorrektur der Flugzeugtreppe auch schon während der Anfahrt über eine Distanz von bis zu 50 m und mehr erkannt werden. Mit dem Sensor zur Erkennung der IR-Strahlung (z.B. optischer Sensor) kann eine Datenverarbeitungsanlage (prozessorgesteuert) verbunden sein, die zum einen ausgebildet ist, die Flugzeugluke zu erkennen und die erkannte Position auf einem Display wieder zu geben, welches dasselbe Display sein kann, wie zur Darstellung von zumindest der IR-Reflektion der IR-Strahlung vom Flugzeug (ausgehend vom IR-Leuchtmittel an der Flugzeugtreppe) in Richtung Flugzeugtreppe. Die Darstellung von zumindest der Flugzeugtreppe und der IR-Lichtreflektion (mittels einer Kamera und/oder eines IR-Sensors) kann auf dem Bildschirm gleichzeitig erfolgen. Ein Kamerabild einer die Flugzeugtür vorzugsweise erkennenden Kamera und Messbild der IR-Sensor(en), können demnach auf dem Display übereinander dargestellt sein. Der basierend auf dem erfassten Licht (IR) Reflektion(en) der IR-Markierung durch den optischen Sensor kann die damit verbundene Berechnungseinrichtung auf dem Display eine Markierung, beispielsweise in Form einer Linie oder von mindestens einem, vorzugsweise zwei Punkten, bereitstellen, die es einem Benutzer ermöglicht zu erkennen, auf welcher Höhe sich die Kanzel der Flugzeugtreppe mit Bezug zu einer Unterkante der Luke der Höhe nach befindet.

Es können Steuermittel zur Höheneinstellung, vorzugsweise an der Treppe (oder einer Fernbedienung mit dem besagten Display) bereitgestellt sein. Wird die Markierung mit einer Unterkannte der (erkannten) Luke auf dem Display in Übereinstimmung gebracht ist die Flugzeugtreppe der Höhe nach vorteilhaft zur Luke ausgerichtet.

Eine zweckmäßige Weiterbildung der vorliegenden Erfindung besteht darin, dass die Markierungseinrichtung mindestens eine Leuchteinrichtung, vorzugsweise einen Laser oder eine Laserstrahl-Anordnung, aufweist, welche vorzugsweise an der Flugzeugtreppe in Richtung des Flugzeugs ausgerichtet und bereitgestellt ist, eine berührungsfreie, visuelle Markierung an dem Flugzeug für eine, vorzugsweise aktuelle bzw. momentane, Flugzeugtreppen-Ausrichtung bereitzustellen.

Erfindungsgemäß sind zwei (1. und 2.) oder drei (1, 2, und 3.) Abstandsmesseinrichtungen vorgesehen, welche bevorzugt an einer Vorderseite der Kanzel (die im angestellten Zustand dem Flugzeugrumpf zugewandt ist) angeordnet sind. Erfindungsgemäß sind diese in einem linken und rechten Bereich, vorzugsweise an einer rechten und linken Kannte (1. und 2. Sensor) und/oder der dritte Sensor in etwa in der Mitte der Vorderseite angeordnet. In Verbindung stehend mit der Datenverarbeitungsanalage kann ein hinterlegter Minimalabstand durch individuelle Messung des Abstands der Sensoren zum Flugzeugrumpf bestimmt und eingehalten werden, selbst wenn das Flugzeug in einem ungünstigen Bereich eine Wölbung aufweisen sollte. Gleichzeitig kann über einen Vergleich der Abstände der beiden äußeren Sensoren (rechts und links) ein Winkel zwischen Flugzeugtrumpf und vorderer Kannte der Flugzeugtreppe einstellbar sein. Wenn der gemessene Abstand der beiden äußeren Sensoren gleich zudem Flugzeugrumpf ist geht man von einer in etwa Parallelstellung der Flugzeugtreppe zum Rumpf aus. Die individuellen Abstände können auf einem Display in Form von Absolutwerten ausgegeben werden oder in einen Winkel umgerechnet werden, wobei ein zu erreichender Zielwinkel (z.B. 180° oder 90°) für eine parallele Ausrichtung angegeben sein kann.

Die Einstellung kann sowohl manuell über ein mit einem Radantrieb verbundenes Steuermittel (z.B. Joystick) erfolgen oder direkt über die Datenverarbeitungseinrichtung, welche dafür zusätzlich zu den Abstandssensoren mit einem Radantrieb und/oder einer Steuereinrichtung steuernd verbunden sein kann. Der Mittlere der drei Sensoren kann dabei dafür sorgen, dass beim Einstellen des Winkels ein Minimalabstand nicht unterschritten wird.

Eine entsprechend ausgebildete Markierung kann beispielsweise die Reflexion eines Leuchtmittels, beispielsweise ein Laserpunk oder -linie(n), sein, der/die beispielsweise die Position einer Kanzel einer Flugzeugtreppe, also eines oberen Bereichs, welcher vorzugsweise mit einer Flugzeugtür oder Flugzeugluke möglichst bündig abschließen soll, repräsentiert. Grundsätzlich kann nach der Erfindung eine Höheneinstellung der Treppe als auch eine Postionierbarkeit durch die Navigationseinrichtung beziehungsweise seine bevorzugten Elemente bereitgestellt sein.

Besonders bevorzugt kann es sich um eine Leuchtmarkierung, ausgehend von der Flugzeugtreppe, beziehungsweise ausgehend von der Leuchteinrichtung, an dem Flugzeug, handeln, welche mindestens eine, vorzugsweise 2, 3, 4 oder mehr geometrische Reflexionen, des Leuchtmittels an dem Flugzeug bereitstellt, mittels welcher eine Orientierung beziehungsweise Ausrichtung der Flugzeugtreppe bezüglich des Flugzeugs ermöglicht ist.

Hierbei (geometrische Reflexion) kann es sich beispielsweise um die Kontur einer Flugzeugtür beziehungsweise Flugzeugluke handeln oder auch um eine oder mehrere Punkte, Linien (wie voranstehend bereits ausgeführt) oder andere Formen handeln, die beispielsweise einem Teil einer Außenkontur einer Flugzeugluke nachempfunden sind und/oder nach einem Randbereich beziehungsweise einem oberen oder unteren Bereich einer Flugzeugtür oder Flugzeugluke ausrichtbar sein können und der Orientierung bzw. Ausrichtung der Flugzeugtreppe gegenüber einem Flugzeug dienen können.

In einer besonders bevorzugten Ausführungsform sind zumindest eine, vorzugsweise 2 Linien als Leuchtmarkierungen vorgesehen, welche die Ausrichtung der Flugzeugtreppe gegenüber einem unteren/oberen Bereich und/oder einem seitlichen Bereich einer Flugzeugtür oder Flugzeugluke ermöglichen.

Die Ausrichtung des Leuchtmittels an der Flugzeugtreppe ist hierbei so bereitgestellt, dass, wenn solche Linien/geometrische Formen der Leuchtmarkierung in einem vordefinierten Bereich gegenüber der Flugzeugtür oder Flugzeugflügel (der eine definierte Position gegenüber einer Tür haben kann positioniert ist, ein oberer Bereich der Flugzeugtreppe, insbesondere eine Kanzel, eine zweckmäßige Position/Ausrichtung beziehungsweise Ausstiegshöhe gegenüber der Flugzeugtür oder Flugzeugluke einnimmt, sodass ein komfortabler Aus- oder Einstieg ermöglicht ist.

Die geometrische Form oder Kontur, welche auf das Flugzeug von der Flugzeugtreppe beziehungsweise von der Leuchteinrichtung projiziert wird, kann beispielsweise mittels eines (beweglichen) Lasers oder einer Laserstrahl-Anordnung, also einer Anordnung mehrerer Laserstrahlquellen, projiziert werden. Grundsätzlich sind jedoch auch andere Leuchteinrichtungen oder Lichtquellen denkbar.

Somit kann durch die Leuchteinrichtung oder Lichtquelle, welche an dem Flugzeug eine entsprechende Leuchtmarkierung reflektiert, eine positionsgenaue Ausrichtung der Flugzeugtreppe gegenüber einem Flugzeug kontaktfrei beziehungsweise berührungsfrei erfolgen.

Kontakt- beziehungsweise berührungsfrei bezieht sich hierbei auf das Verhältnis zwischen Flugzeug und Flugzeugtreppe, wobei kein Teil der Flugzeugtreppe mit dem Flugzeug beziehungsweise dem Flugzeugrumpf in Kontakt stehen soll, um möglichen Verletzungen der Außenhaut des Flugzeugrumpfs vorzubeugen.

Die Reflexion von Licht beziehungsweise elektromagnetischer Strahlung oder Schallwellen von dem Flugzeugrumpf ist erfindungsgemäß nicht als Kontakt beziehungsweise Berührung Flugzeugtreppe mit dem Flugzeug zu verstehen.

Die Ausrichtung der Treppe kann sowohl der Höhe nach als auch seitlich zu dem Flugzeug aufgrund der Leuchteinrichtung erfolgen.

Nach einer bevorzugten Weiterbildung ist es vorgesehen, dass mindestens ein optischer Sensor, insbesondere eine digitale Kamera, vorgesehen ist, der mit einer prozessorgesteuerten bzw. programmierbaren Datenverarbeitungsanlage verbunden ist und mit dieser zusammenwirkt, einen vordefinierbaren Bereich des Flugzeugs, an welchen die Flugzeugtreppe annäherbar ist, zu erkennen. Erfindungsgemäß kann eine prozessorgesteuerte Datenverarbeitungsanlage auch programmierbar sein. Dies kann sowohl alternativ als auch ergänzend zu den voranstehend erläuterten Markierungseinrichtungen erfolgen.

Der vordefinierte Bereich kann insbesondere eine Tür oder eine Luke eines Flugzeugs sein. Der mindestens eine optische Sensor kann zusätzlich oder alternativ zu der Leuchteinrichtung vorgesehen sein. Durch die Ausrichtung des vordefinierten Bereichs, beispielsweise der Flugzeugtür, gegenüber dem optischen Sensor kann eine ortsgenaue Positionierung der Flugzeugtreppe an dem Flugzeug erfolgen.

Basierend auf dem erkannten vordefinierten Bereich kann auch eine automatische Ausrichtung der Treppe gegenüber dem Flugzeug erfolgen, wobei eine Stelleinrichtung für eine Höheneinstellung und/oder eine Verschiebeeinrichtung beziehungsweise Einrichtung zum Verfahren der Flugzeugtreppe gegenüber dem Flugzeug bereitgestellt sein können.

Für die Höheneinstellung kann beispielsweise ein pneumatisches, hydraulisches oder Schneckengewinde-Element bereitgestellt sein, welches die Höhe der Treppe gegenüber einem Grundkörper der Treppe veränderbar bereitstellt. Die Einrichtung zum Verfahren der Flugzeugtreppe kann mindestens ein Rad, vorzugsweise ein angetriebenes Rad, aufweisen.

In der prozessorgesteuerten Datenverarbeitungsanlage können Informationen zu dem vordefinierbaren Bereich hinterlegt sein. Dies kann beispielsweise eine Datenbank mit verschiedenen Flugzeugtüren sein. Durch einen automatischen oder manuellen Abgleich des Flugzeugtyps mit den hinterlegten Informationen und/oder einen Abgleich empfangener Daten des optischen Sensors mit der hinterlegten Datenbank kann ein vordefinierter Bereich, welcher in der Datenbank hinterlegt sein kann, erkannt werden und als Ziel zur Ausrichtung der Flugzeugtreppe ausgewählt werden. Grundsätzlich kann eine Ausrichtung der Flugzeugtreppe aufgrund von Hinterlegten Daten zu dem jeweiligen Flugzeugtyp erfolgen. Diese Daten sind allgemein bekannt, da sie eine nationalen und internationalen Evaluierungsprozess unterlegen können, welche einer Zulassung eines Flugzeugtyps voraus gehen kann. Die dadurch zugänglichen Daten, das dadurch zugängliche Datenblatt, kann als Grundlage zur Bestimmung / Extrapolation der Lukenposition(en) dienen. In Kombination mit einer Hinterlegten oder bestimmbaren Position des Flugzeugs auf einem Flughafen (GPS, hinterlegte Koordinaten) kann die erfindungsgemäße Flugzeugtreppe vorzugsweise eine Luke ansteuern. Dabei können Informationen von dem optischen Sensor mit Einträgen aus der Datenbank verglichen werden, um einen vordefinierten Bereich zu erkennen und die Flugzeugtreppe diesem vorzugsweise anzunähern. Dieser Vorgang kann wiederum entweder automatisch oder manuell durch einen Benutzer erfolgen. Der optische Sensor und die prozessorgesteuerte Datenverarbeitungsanlage können insbesondere gemeinsam Feststellen, wenn der mit der Flugzeugtreppe in einem Moment angesteuerte Punkt dem vordefinierten Bereich entspricht und entsprechende Korrekturen des Kurses der Treppe beim Annähern an das Flugzeug vornehmen.

Wurde der vordefinierte Bereich durch einen Benutzer oder durch die prozessorgesteuerte Datenverarbeitungsanlage erkannt, kann die Annäherung der Flugzeugtreppe an das Flugzeug benutzergesteuert oder automatisch erfolgen. Für eine benutzergesteuerte Annäherung kann ein Wiedergabebildschirm bereitgestellt sein, der Informationen von dem optischen Sensor, insbesondere einer Kamera, wiedergibt. Auf dem Wiedergabebildschirm kann ein Raster oder ein sonstiges Orientierungsmittel bereitgestellt sein, welches es dem Benutzer ermöglicht, eine Ausrichtung des Flugzeugtyps gegenüber der Flugzeugtreppe basierend auf Informationen, welche auf dem Bildschirm wiedergegeben werden, bereitzustellen und/oder zu überprüfen und/oder zu beeinflussen.

Bei einer automatischen Ausrichtung der Flugzeugtreppe gegenüber eines Flugzeugtyps kann in der gleichen Weise vorgegangen werden, wie bei einer Ausrichtung der Flugzeugtreppe durch einen Benutzer, wobei die Orientierung an einem auf dem Bildschirm abgebildeten Raster automatisch oder auch ohne Bildschirm aufgrund eines hinterlegten Rasters oder Orientierunsgmittels erfolgt. Alternativ oder ergänzend hierzu kann auch eine direkte Orientierung/Ausrichtung des erkannten Flugzeugs gegenüber dem optischen Sensor erfolgen, wobei die prozessorgesteuerte Datenverarbeitungsanlage eingerichtet ist, Mittel zur Höhenverstellung und zur Verschiebung der Flugzeugtreppe, basierend auf der relativen Position und/oder Ausrichtung zwischen optischem Sensor und erkanntem Flugzeug(typ) beziehungsweise Flugzeugluke, anzusteuern.

Für die Bestimmung des Abstands der Treppe von dem Flugzeug kann es vorgesehen sein, dass mit der prozessorgesteuerten Datenverarbeitungsanlage ein Mittel zur Abstandsbestimmung, vorzugsweise eine auf Ultraschall, UV- und/oder Lasterstrahlung basierende Messeinrichtung oder der optische Sensor mit entsprechender Ausbildung zur Abstandsbestimmung, verbunden ist, die einen Abstand zu dem Flugzeug, insbesondere zu dem vordefinierbaren Bereich des Flugzeugs, bestimmt. Somit ist nicht nur eine seitliche Ausrichtung, beziehungsweise eine Ausrichtung der Höhe nach oder eine Einstellung des Winkels zwischen Flugzeug und Treppe durch die prozessorgesteuerte Datenverarbeitungsanlage ermöglicht, sondern auch ein definierter Abstand zwischen Flugzeugtreppe und Flugzeug bereitstellbar und/oder einstellbar.

Die Mittel zur Abstandsbestimmung können grundsätzlich auch dann zum Einsatz kommen, wenn ein Benutzer die Treppe, basierend auf der Leuchteinrichtung beziehungsweise auf Informationen von dem optischen Sensor über den Wiedergabebildschirm, dem Flugzeug annähert. Hierbei könnte beispielsweise auf dem Bildschirm eine Abstandsanzeige angegeben sein, welche dem Benutzer, insbesondere automatisch, anzeigt, in welchem Abstand die Treppe von dem Flugzeug derzeit in einem vordefinierten Bereich, beispielsweise im Bereich der Kanzel gegenüber dem Flugzeugrumpf, vorgesehen ist. Es können auch mehrere Abstände messbar und/oder darstellbar sein, welche den Abstand von unterschiedlichen Bereichen der Flugzeugtreppe, beispielsweise einer rechten und linken Kannte der Kanzel, gegenüber dem Flugzeug bilden. So kann auch eine gleichmäßig seitliche/parallele Ausrichtung zwischen Flugzeugrumpf und Kanzel erkennbar und einstellbar sein.

Zweckmäßigerweise ist es vorgesehen, dass die prozessorgesteuerte Datenverarbeitungsanlage mit einer Vortriebseinrichtung, insbesondere mit mindestens einem angetriebenen Rad, der Flugzeugtreppe verbunden ist und dieses für eine Annäherung der Treppe an das Flugzeug antreibend steuert.

Durch die Steuerung einer Vortriebseinrichtung durch die prozessorgesteuerte Datenverarbeitungsanlage kann beispielsweise eine automatische Positionierung, Ausrichtung und Annäherung der Flugzeugtreppe gegenüber dem Flugzeug erfolgen. Durch ansprechende Eingabemittel kann jedoch auch eine manuelle Steuerung beispielsweise über einen Joystick oder sonstige Eingabemittel durch einen Benutzer über die prozessorgesteuerte Datenverarbeitungsanlage erfolgen, wobei diese wiederum die Eingabe des Benutzers in einer Ansteuerung der Vortriebseinrichtung sowie der Einrichtung zur Höhenverstellung und Winkeleinstellung zwischen Flugzeug uns Treppe umsetzt.

Die Vortriebseinrichtung, welche mindestens ein Rad einer Flugzeugtreppe ansteuern kann, kann beispielsweise ein Motor sein. Grundsätzlich kann auch für jedes Rad ein separater Motor vorgesehen sein, welcher separat durch die prozessorgesteuerte Datenverarbeitungsanlage ansteuerbar ist, wodurch komplexe Bewegungen, wie beispielsweise Drehbewegungen und Kurven, durch individuelle Ansteuerung der einzelnen Motoren der einzelnen Räder umsetzbar ist.

Besonders bevorzugt ist es vorgesehen, dass ein "Global Positioning System"-Transponder (GPS-Transponder) angeordnet ist, mittels welchem eine Position der Treppe bestimmbar ist. Der GPS-Transponder kann sowohl zum Senden und/oder zum Empfangen von GPS-Signalen ausgebildet sein. Grundsätzlich kann der GPS-Transponder ein beliebiges Mittel sein, welches die Positionsbestimmung der Treppe lokal oder global, vorzugsweise satellitengestützt, ermöglicht und basierend auf der bestimmten Position die Berechnung einer Route zu einer Zielposition (z.B. Flugzeug oder Hangar) bereitstellt.

Eine zweckmäßige Weiterbildung der vorliegenden Erfindung besteht darin, dass der optische Sensor und/oder ein weiterer optischer Sensor ausgebildet ist, eine Reflexion des Lichts der Leuchteinrichtung an dem Flugzeug, zumindest Distanzbeschränkt, zu erkennen und basierend auf der erkannten Reflexion und dessen relativen Position gegenüber dem vordefinierbaren Bereich an dem Flugzeug eine Ausrichtung der Flugzeugtreppe gegenüber dem Flugzeug bereitzustellen, vorzugsweise unterstützt durch die prozessorgesteuerte Datenverarbeitungseinrichtung.

Mit dem Begriff "Distanz-beschränkt" soll ausgedrückt werden, dass die Erkennung einer optischen Markierung an einem Flugzeug, beispielsweise in Form eines Leuchtpunkts oder einer geometrischen Form, welche auf ein Flugzeug projiziert wird, nicht in beliebiger Distanz unbedingt erkennbar sein muss. Damit soll klargestellt sein, dass insbesondere der Bereich/Abstand von Treppe zu Flugzeug von Bedeutung sein kann, in welchem entweder Sensoren oder ein Benutzer selbst aufgrund der Distanz zwischen Treppe und Flugzeug eine Markierung oder distinktive Bereiche des Flugzeugs, wie beispielsweise eine Flugzeugtür, noch erkennen kann und somit aufgrund dieser visuellen Information eine Entscheidung treffen kann, welchem Teil des Flugzeugs und wie diesem Teil des Flugzeugs man sich zu nähern hat.

Grundsätzlich kann die Navigationseinrichtung nach der vorliegenden Erfindung verschiedene Elemente aufweisen, welche alle demselben Grundgedanken dienen können: Die Flugzeugtreppe gegenüber dem Flugzeug positions- / orientierungsgenau vertikal und/oder horizontal auszurichten.

In einer Ausführungsform der vorliegenden Erfindung kann die positionierbare Flugzeugtreppe mit einer prozessorgesteuerten Datenverarbeitungsanlage ausgebildet sein und Mittel zur Navigation aufweisen. Aufgrund von aktuellen hinterlegten Informationen über die genaue Position, Ausrichtung, Höhe (welche in Abhängigkeit vom Gewicht des Flugzeugs dynamisch variieren kann) und Flugzeugtyp des anzusteuernden Flugzeugs kann die Flugzeugtreppe beispielsweise aus einem Hangar oder einem sonstigen Bereich, welcher von dem Flugzeug beabstandet sein kann, dem Flugzeug zugeführt werden. Dabei kann die prozessorgesteuerte Datenverarbeitungsanlage Antriebseinrichtungen für die Flugzeugtreppe ansteuern, um diese zu dem Flugzeug zu befördern. Die relative Position der Treppe gegenüber dem Flugzeug kann aufgrund einer lokalen oder globalen Positionierungseinrichtung (beispielsweise GPS) bestimmt werden. Basierend auf diesen Informationen kann eine Route zu dem Flugzeug beziehungsweise zu der Flugzeugtür oder Flugzeugluke berechnet und ein entsprechender Kurs auf die Zielposition der Flugzeugträger bei dem Flugzeug in der prozessorgesteuerten Datenverarbeitungsanlage, beispielsweise in einem Speichermodul, hinterlegt werden.

Sollten nachträglich, nach einer Positionierung der Treppe an dem Flugzeug eine Änderung der gegenseitigen Ausrichtung erfolgen, beispielsweise durch eine Veränderung der Höhe des Flugzeugs oder einer Veränderung der Position der Treppe, kann es erfindungsgemäß vorgesehen sein, Mittel für eine dynamische oder diskrete (schrittweise) Anpassung des Istzustands an eine gewünschte Ausrichtung (Winkel, Höhe, seitliche Ausrichtung) insbesondere als Teil der Datenverarbeitungseinrichtung vorzusehen. Hierdurch kann einer Berührung zwischen Treppe und Flugzeug, insbesondere automatisch, vorgebeugt sein.

Die voranstehend beschriebenen Einrichtungen können sowohl jeweils einzeln auch als auch in Kombination zueinander vorgesehen sein, selbst dann, wenn sie nur in Kombination miteinander beschrieben sind.

Die Erfindung wird nun anhand eines Ausführungsbeispiels näher erläutert.

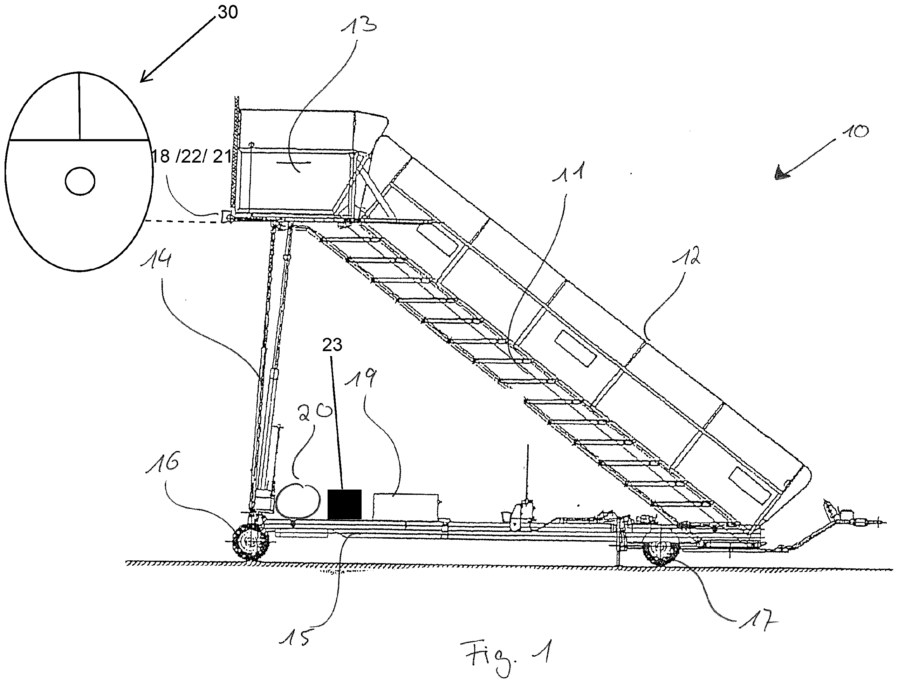

- Fig. 1: zeigt eine Seitenansicht einer Flugzeugtreppe.

Die Flugzeugtreppe 10 kann einen Treppenaufgang 11 sowie eine Treppenkanzel 13 aufweisen. Der Treppenaufgang 11 kann mit einem Geländer 12 gesichert sein, um die Sicherheit von Passagieren beim Ein- und Aussteigen zu erhöhen. Die Treppe kann mit einem Fahrgestell 15 gebildet sein, an welchem zumindest ein Rad 16, 17 vorgesehen sein kann. Eine höhenverstellbare Einrichtung 14, welche beispielsweise pneumatisch, hydraulisch betätigbar ist oder mechanisch wirkt und mit beispielsweise einem Schneckenwendel ausgebildet ist, kann zwischen dem Fahrgestell 15 und einem Bereich des Aufsatzes, welcher beispielsweise aus der Kanzel 13 des Treppenaufgangs 11 gebildet sein kann, angeordnet sein.

Die Navigationseinrichtung kann zumindest eines von 18, 19, 20, 21, 22, 23 wie nachfolgend beschreiben einzeln oder in beliebiger Kombination sein.

In einem vorderen Bereich, welcher in einem dem Flugzeug zugestellten Zustand dem Flugzeug zugewandt ist, kann ein Leuchtmittel 18 und/oder ein optischer Sensor 22 vorgesehen sein. Die dem Flugzeug zustellbare Seite ist in Figur 1 die linke Seite der Flugzeugtreppe.

Beim Zustellen der Treppe an ein Flugzeug 30 kann das Leuchtmittel 18 auf der Oberfläche des Flugzeugs eine Projektion bereitstellen, anhand welcher eine Orientierung beziehungsweise Ausrichtung der Treppe gegenüber dem Flugzeug sowohl der Höhe nach als auch seitlich zu dem Flugzeug bereitgestellt werden kann.

Schematisch ist als Flugzeug ein ovaler Körper 30 links von der Flugzeugtreppe abgebildet, wobei die von dem Leuchtmittel 18 ausgehende Strahlung in Form einer gestrichelten Linie zwischen Flugzeugtreppe 10 und schematisch dargestelltem Flugzeugkörper 30 abgebildet ist. Der Flugzeugrumpf kann sowohl in horizontaler und/oder vertikaler Richtung oval ausgebildet sein.

Anhand der durch das Leuchtmittel 18 auf der Flugzeugoberfläche projizierten Markierung kann eine Ausrichtung der Flugzeugtreppe auch für Bodenpersonal sowohl der Höhe nach als auch vertikal zum Flugzeug in einfacher Weise ermöglicht sein.

Hierfür kann beispielsweise eine erste horizontale (Laser/Licht) Linie bereitgestellt sein, die die Höhe der Flugzeugtreppe 10 im Bezug zu einer Flugzeugtür darstellt und eine seitliche vertikale (Laser/Licht) Linie, welche eine horizontale Ausrichtung der Flugzeugtreppe gegenüber der Flugzeugtür anzeigt.

Die Einrichtung 22 kann mit einer programmierbaren und/oder prozessorgesteuerten Datenverarbeitungseinrichtung 19 verbunden sein und mit dieser zusammenwirken.

Die Flugzeugtreppe kann Räder 16, 17 auch auf mehreren Achsen aufweisen, welche auch antreibbar bereitgestellt sein können. Die angetriebenen Räder beziehungsweise deren Antriebe 20 können mit der prozessorgesteuerten Datenverarbeitungseinrichtung 19 verbunden sein, wobei die prozessorgesteuerte Datenverarbeitungseinrichtung ausgebildet ist, zumindest eines der Räder beziehungsweise deren Antrieb anzusteuern. Dadurch kann eine Positionsveränderung der Flugzeugtreppe 10, basierend auf Steuerbefehlen der prozessorgesteuerten Datenverarbeitungsanlage 19, bereitgestellt sein.

Weiterhin kann eine Einrichtung zur Bestimmung der lokalen und/oder globalen Position der Flugzeugtreppe 10, beispielsweise ein GPS-Transponder, bereitgestellt sein, mittels welchem die prozessorgesteuerte Datenverarbeitungseinrichtung 19 eine Route zu einer definierten Position berechnen und/oder anschließend durchführen/steuern kann.

Die definierte Position kann beispielsweise eine bestimmte Position auf einem Flugfeld, insbesondere ein Flugzeugparkplatz, beziehungsweise die anhand eines Positionsbestimmungssystems ermittelte Position eines Flugzeugs an sich sein, beispielsweise mittels eines GPS-Transponders an einem Flugzeug oder durch hinterlegte Daten zur Position und/oder Ausrichtung und/oder Höhe eines Flugzeugs. Die Daten zur Position, Ausrichtung und/oder Höhe eines Flugzeugs können beispielsweise vom Flugzeug selbst oder in einer Einrichtung zum Verwalten, Steuern und/oder Kontrollieren von Flugzeugbewegungen auf einem Flughafen hinterlegt sein und von der Prozessorgesteuerten Datenverarbeitungseinrichtung auslesbar sein.

Der optische Sensor 22 kann mit der programmierbaren beziehungsweise prozessorgesteuerten Datenverarbeitungseinrichtung 19 so verbunden sein, dass diese eine Tür beziehungsweise eine Öffnung oder Luke an dem Flugzeug erkennt. Statt des optischen Sensors oder ergänzend hierzu kann auch beispielsweise ein Ultraschallsensor vorgesehen sein, mittels welche ein Abstand der Treppe zu dem Flugzeug bestimmbar ist. In Abhängigkeit von der zu erkennenden Tür und der Position der selbigen gegenüber dem optischen Sensor kann die prozessorgesteuerte Datenverarbeitungseinrichtung eine Position und eine Höhe des Aufbaus der Flugzeugtreppe, insbesondere der Kanzel 13, an die Positionshöhe und Orientierung der Flugzeugtür bereitstellen.

Hierdurch kann die erfindungsgemäße Flugzeugtreppe 10 Informationen, welche nicht bereits in der prozessorgesteuerten Datenverarbeitungseinrichtung oder in einer anderen Einrichtung/Datenspeicher, auf welche die prozessorgesteuerte Dateneinrichtung zugreifen kann, hinterlegt sind, aufgrund sensorischer Daten, wie beispielsweise die des optischen Sensors, kompensieren.

Der optische Sensor (und/oder Ultraschallsensor) kann insbesondere dann zum Einsatz kommen, wenn die Treppe 10 den Nahbereich des Flugzeugs 30 erreicht hat, um beispielsweise die Tür des Flugzeugs zu erkennen (und/oder dem Abstand zu dieser), und die Treppe der Flugzeugtür zuzuführen. Alternativ oder ergänzend, kann die Navigation der Treppe, insbesondere im Nahbereich, auch basierend auf hinterlegten Informationen zu der Petition und/oder Höhe und/oder Ausrichtung der Tür auch unabhängig von dem optischen Sensor erfolgen.

Mittels des optischen Sensors kann die Ausrichtung der Flugzeugtreppe gegenüber dem Flugzeug in zweierlei Weise bestimmt werden. Zum einen kann die Information über die relative Position des optischen Sensors gegenüber einer erkannten Tür oder Luke an dem Flugzeug verwendet werden, um eine bevorzugte Ausrichtung der Kanzel gegenüber beispielsweise der Flugzeugtür bereitzustellen. Bevorzugt ist die Ausrichtung der Kanzel beispielsweise dann, wenn eine bequeme Ausstiegshöhe und Position vom Innenbereich des Flugzeugs zu der Kanzel 13 bereitgestellt ist und/oder der Abstand zwischen Kanzel 13 und Flugzeug einen möglichst geringen jedoch kontaktfreien Bereich bildet.

Für eine Abstandsbestimmung ist der optische Sensor 22, ein weiterer optischer Sensor 21 oder eine auf Schall oder elektromagnetischer Strahlung beruhende Einrichtung zur Bemessung der Distanz bereitgestellt. Hierfür können übliche Abstandsmessmittel, basierend auf beispielsweise Infrarot-, Ultraschall-, Lasertechnik oder sonstigen Methoden zur Distanzbestimmung, bereitgestellt sein.

Die Abstandsmessmittel sind wiederum mit der prozessorgesteuerten Datenverarbeitungseinrichtung verbunden, um einen vordefinierten Abstand zwischen der Treppe, insbesondere der Kanzel 13, und einem Einstiegsbereich eines Flugzeugs bereitzustellen. Dieser kann vorzugsweise einige Millimeter bis wenige Zentimeter, vorzugsweise zwischen 1 und 10 cm, betragen.

Der tatsächliche Abstand zwischen der Flugzeugtreppe 10, insbesondere der Kanzel 13, und dem Flugzeug 30 kann über ein entsprechendes Ausgabemittel einem Benutzer, beispielsweise auf dem Bildschirm 23, angezeigt werden. Bei einer automatischen Annäherung der Flugzeugtreppe 10 an ein Flugzeug 30 kann dieses Ausgabemittel ebenfalls zu Überwachungszwecken bereitgestellt sein.

Vorzugsweise wir eine Kombination von Markierungseinrichtung zur Ausrichtung der Treppe und Abstandmesseinrichtung für eine Annäherung der Treppe an das Flugzeug eingesetzt. Hierfür kann beispielsweise ein, wie voranstehend beschriebene, Laser oder eine Laseranordnung und mindestens ein Ultraschallsensor verwendet werden.

Erfindungsgemäß wird hierbei in einem Bereich der Treppe, der sich dem Flugzeug in einer Endposition besonders stark annähert, der Kanzel, in einer rechten und linken äußeren Position jeweils mindestens ein Mittel zur Abstandsbestimmung vorgesehen.

Hierdurch ist nicht nur ein absoluter Abstand der Treppe von dem Flugzeug bestimmbar, sondern vorzugsweise auch eine relative Orientierung der Treppe zu dem Flugzeug. Beispielsweise durch eine separate Signalausgabe für das linke und rechte Abstandsmessgerät kann eine Schrägstellung der Treppe gegenüber dem Flugzeugt erkennbar/bestimmbar sein. Eine bevorzugte Endposition kann beispielsweise dann erreicht sein, wenn Abstandsmesseinrichtungen zur linken und rechten denselben Abstand oder einen ähnlichen zum Flugzeug anzeigen.

Besonders bevorzugt, sind das linke und das rechte Anstandsmessgerät an einem seitlich besonders weit außen liegenden/äußersten Punkt der Treppe, beziehungsweise der Kanzel, vorgesehen. Hierdurch kann einer versehentlichen Kollision der Treppe mit dem Flugzeug aufgrund der Messdaten des Abstandsmessgeräteverhindert sein.

Diese Ausführungsform, sowie die weiteren Ausführungsformen nach der vorliegenden Erfindung können sowohl mit einem motorisierten Antrieb zur Fortbewegung der Treppen vorgesehen sein oder auch für eine Händische Ausrichtung der Treppe gegenüber dem Flugzeug, wobei die Einrichtungen zur motorisierten Annäherung der Treppe an das Flugzeug und die entsprechende Steuerung entfallen könne.

Diese beiden Elemente (Anstandsmessgerät, insbesondere Ultraschallsensor; Laser) können Bestandteil der erfindungsgemäßen Navigationseinrichtung sein.

## Patentansprüche

1. Verfahrbare Flugzeugtreppe (10) zum Ein- und Aussteigen aus einem Flugzeug (10),
mit einer Navigationseinrichtung, mittels welcher die Flugzeugtreppe (10) an einer Flugzeugtür oder Flugzeugluke des Flugzeugs (30) ortsgenau der Höhe nach positionierbar und ausrichtbar ist,
**gekennzeichnet durch** zwei Abstandsmesseinrichtungen (21), welche in einem linken und rechten Bereich der Kanzel angeordnet sind und bereitgestellt sind, jeweils einen Abstand zum Flugzeug zu messen und eine prozessorgesteuerte Datenverarbeitungsanlage (19), welche ausgebildet ist, aus einem Vergleich der gemessenen Abstände der Abstandsmesseinrichtungen einen Winkel der Flugzeugtreppe zu dem Objekt zu bestimmen.

2. Verfahrbare Flugzeugtreppe (10) nach Anspruch 1,
**dadurch gekennzeichnet,**
**dass** die Navigationseinrichtung eine berührungsfreie Markierungseinrichtung (18) aufweist, mittels welcher die Position und/oder Ausrichtung mindestens eines dem Flugzeug (30) zustellbaren Bereichs der Flugzeugtreppe (10) gegenüber dem Flugzeug (30), vorzugsweise visuell, bestimmbar ist.

3. Verfahrbare Flugzeugtreppe (10) nach Anspruch 2,
**dadurch gekennzeichnet,**
**dass** die Markierungseinrichtung (18) mindestens eine Leuchteinrichtung, vorzugsweise einen Laser oder eine Laserstrahl-Anordnung aufweist, welche vorzugsweise an der Flugzeugtreppe (10) in Richtung des Flugzeugs (30) ausgerichtet und vorgesehen ist, eine berührungsfreie, vorzugsweise visuelle Markierung an dem Flugzeug (30), in Form einer Reflexion der Leuchteinrichtung an einem Flugzeugrumpf des Flugzeugs, für eine Flugzeugtreppen-Ausrichtung bereitzustellen.

4. Verfahrbare Flugzeugtreppe (10) nach Anspruch 1 oder 2,
**dadurch gekennzeichnet,**
**dass** mindestens ein optischer Sensor (22), (20), insbesondere eine digitale Kamera, vorgesehen ist, der mit der einer prozessorgesteuerten Datenverarbeitungsanlage (19) verbunden ist und mit dieser zusammenwirkt, einen vordefinierbaren Bereich des Flugzeugs (30), an welchen die Flugzeugtreppe (10) annäherbar ist, zu erkennen.

5. Verfahrbare Flugzeugtreppe (10) nach Anspruch 4,
**dadurch gekennzeichnet,**
**dass** mittels des optischen Sensors (22) und/oder eines weiteren optischen Sensors (10), eine Reflexion des Lichts der Leuchteinrichtung (22) an dem Flugzeug zumindest distanzbeschränkt erkennbar und basierend auf der erkannten Reflexion und seiner relativen Position gegenüber dem vordefinierbaren Bereich an dem Flugzeug (30) eine Ausrichtung der Flugzeugtreppe (10) gegenüber dem Flugzeug bereitstellbar ist.

## Claims

1. Movable aircraft staircase (10) for boarding and disembarking from an aircraft, with a navigation device, by means of which the aircraft staircase (10) can be positioned and aligned at an aircraft door or aircraft hatch (30) to the exact height required,
**characterised by** two distance measuring devices (21), which are arranged in a left and right region of the top step of the stair case and are provided to measure each a distance to the aircraft, and a processor-controlled data processing system (19), which is designed to determine an angle of the aircraft staircase to the object from a comparison of the measured distances of the distance measuring devices.

2. Movable aircraft staircase (10) according to claim 1,
**characterised in that**
the navigation device has a non-contact marking device (18) by means of which the position and/or orientation of at least one region of the aircraft staircase (10) which can be delivered to the aircraft (30) can be determined, preferably visually, relative to the aircraft (30).

3. Movable aircraft staircase (10) according to claim 2,
**characterised in that**
the marking device (18) has at least one illuminating device, preferably a laser or a laser beam arrangement, which is preferably aligned on the aircraft staircase (10) in the direction of the aircraft (30) and is intended to provide a contact-free, preferably visual marking on the aircraft (30), in the form of a reflection of the lighting device on an aircraft fuselage of the aircraft, for an aircraft staircase alignment.

4. Movable aircraft staircase (10) according to claim 1 or 2,
**characterised in that**
at least one optical sensor (22), in particular a digital camera, is provided, which is connected to the processor-controlled data processing system (19) and interacts with the latter to recognise a predefinable area of the aircraft (30) to which the aircraft staircase (10) can be brought close.

5. Movable aircraft staircase (10) according to claim 4,
**characterised in that**
by means of the optical sensor (22) and/or a further optical sensor, a reflection of the light from the lighting device (22) on the aircraft can be recognised at least to a limited distance and, based on the recognised reflection and its relative position with respect to the predefinable area on the aircraft (30), an alignment of the aircraft staircase (10) with respect to the aircraft can be provided.

## Revendications

1. Rampe déplaçable de l'avion (10) pour l'embarquement et pour le débarquement d'un avion (10) avec un dispositif de navigation par le biais duquel la rampe de l'avion (10) est positionnable et orientable au niveau de la porte de l'avion ou au niveau de l'écoutille de l'avion (30) positionnés précisément et ce selon la hauteur,
**caractérisée par** deux dispositifs de mesure de distance (21) qui sont disposés dans une zone gauche et droite de la chaire et déployés pour mesurer respectivement la distance au niveau de l'avion et par un dispositif de traitement de données commandé par processeur (19) qui est formé d'une comparaison des distances mesurées des installations de distance pour déterminer un angle de la rampe de l'avion envers l'objet.

2. Rampe déplaçable de l'avion (10) selon la revendication 1 est **caractérisée** de sorte que le dispositif de navigation présente un moyen de marquage sans contact (18) par le biais duquel le positionnement et/ou l'orientation d'au minimum d'une zone avancée vers l'avion (30) de la rampe de l'avion (10) est identifiable par rapport à l'avion (30), de préférence à titre visuel.

3. Rampe déplaçable de l'avion (10) selon la revendication 2 est **caractérisée** de sorte que le dispositif de marquage (18) présente au minimum un dispositif d'éclairage, de préférence un laser ou un dispositif de faisceau laser qui est orienté et prévu de préférence au niveau de la rampe de l'avion (10) dans la direction de l'avion (30), un marquage sans contact, de préférence visuel au niveau de l'avion (30) sous forme d'une réflexion des dispositifs d'éclairage d'un fuselage d'aéronef de l'avion pour permettre une orientation des rampes de l'avion.

4. Rampe déplaçable de l'avion (10) selon la revendication 1 ou 2 est **caractérisée** de sorte qu'au minimum un capteur optique (22), en particulier une caméra digitale, est prévu qui est relié au dispositif de traitement de données commandé par processeur (19) coopérant avec lui détectant une zone prédéfinie de l'avion (30) sur laquelle la rampe de l'avion (10) est acheminée.

5. Rampe déplaçable de l'avion (10) selon la revendication 4 est **caractérisée** de sorte qu'une réflexion de la lumière du dispositif d'éclairage (22) est détectable par le biais du capteur optique (22) et /ou par le biais d'un capteur optique supplémentaire au niveau de l'avion et au minimum à distance réduite et que sur la base de la réflexion détectée et de son positionnement relatif à l'encontre de la zone prédéfinie au niveau de l'avion (30) une orientation de la rampe de l'avion (10) par rapport de l'avion peut être déployée.
